(19) Europäisches Patentamt
European Patent Office
Office européen des brevets

(11) EP 3 228 639 B1

(12) **EUROPEAN PATENT SPECIFICATION**

(45) Date of publication and mention of the grant of the patent:
**07.11.2018 Bulletin 2018/45**

(51) Int Cl.:
*C08F 214/26* (2006.01) *B32B 1/08* (2006.01)

(21) Application number: **17163575.8**

(22) Date of filing: **25.03.2013**

(54) **FLUOROPOLYMER PIPE**

FLUORPOLYMERROHR

TUYAU DE FLUOROPOLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2012 EP 12161236**

(43) Date of publication of application:
**11.10.2017 Bulletin 2017/41**

(62) Document number(s) of the earlier application(s) in accordance with Art. 76 EPC:
**13714249.3 / 2 830 870**

(73) Proprietors:
- **Solvay Specialty Polymers Italy S.p.A.**
  **20021 Bollate (MI) (IT)**
- **Technip France**
  **92400 Courbevoie (FR)**

(72) Inventors:
- **COLAIANNA, Pasqua**
  **20100 Milano (IT)**
- **BESANA, Giambattista**
  **22006 Mariano Comense (CO) (IT)**
- **MIRENDA, Marco**
  **20017 Rho (MI) (IT)**
- **MESSINA, Nicasio Edoardo**
  **27020 Zerbolo (RV) (IT)**

(74) Representative: **Lavoix**
**2, place d'Estienne d'Orves**
**75441 Paris Cedex 09 (FR)**

(56) References cited:
**WO-A1-2012/019070** **WO-A2-02/44266**
**DE-T2- 60 021 118** **US-A- 4 262 101**
**US-A1- 2003 069 343** **US-B1- 6 774 196**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention pertains to a pipe being an unbonded flexible riser comprising at least one fluoropolymer layer and to use of said pipe in downhole operations including drilling operations.

### Background Art

Fluoropolymers derived from tetrafluoroethylene (TFE) and perfluorinated alkyl vinyl ethers (PAVEs) have found wide applications as coatings and linings of process vessels, storage tanks, pipes, valves and fittings due to their high chemical inertness, high melting points, high service temperatures and thermal stability.

In particular, pipes are typically used for conveying oils and gases at temperatures of usually above 100°C, preferably above 200°C, depending on the application. For instance, pipes used in drilling operations need to withstand high temperatures and pressures, depending where the well is drilled and how deep. The drilling operations indeed involve deeper and deeper wells and typically reach temperatures as high as 260°C or higher than 260°C, especially proximate to the bottom of the well.

Melt-processable fluoropolymers derived from tetrafluoroethylene (TFE) and perfluoroalkylvinylethers (PAVEs), which are commonly known in the art for being suitable for manufacturing shaped articles such as pipes, typically comprise from 1 % to 5% by moles of recurring units derived from said PAVEs.

These fluoropolymers have generally a melting point of at least 265°C, so that they are advantageously used in applications where high operating temperatures are required. In particular, melt-processable TFE copolymers with perfluoropropylvinylether (PPVE) are most preferred because of their higher melting point, typically between 302°C and 310°C.

In this connection, patent US 6 774 196 discloses a copolymer fluorine-containing copolymer comprising 90 to 99.4% by mole of a repeating unit derived from tetrafluoroethylene, 0.5 to 5% by mole of a repeating unit derived from at least one lower perfluoro(alkyl vinyl ether), and 0.1 to 5% by mole of a repeating unit derived from at least one higher perfluoro(vinyl ether), wherein the fluorine-containing copolymer has a melt flow rate of 0.1 g/10 min to 100 g/10 min and a melting point of 290°C to 325°C. Besides, application US 2003/069343 discloses poly(tetrafluoroethylene) polymers having a melting temperature above 315°C.

There is thus the need in the art for pipes which are endowed with improved mechanical properties and improved thermal resistance at high operating temperatures, while retaining chemical resistance to corrosive chemical agents.

### Summary of invention

It has been now found that the pipe of the present invention successfully enables overcoming the deficiencies of the pipes known in the art.

The present invention provides a pipe being an unbonded flexible riser as defined in claim 1.

The Applicant has surprisingly found that the polymer (F) according to the present invention is successfully endowed with improved mechanical properties with respect to commercially available TFE copolymers with PAVEs, in particular higher yield strength values and lower creep strain values. It is well known in the art that these properties are related to pipes burst resistance and/or pipes decompression under the effect of pressure impacts.

The Applicant has thus found that the pipe of the present invention advantageously withstand high pressure and high temperature conditions, while retaining chemical resistance in harsh environments and thermal resistance at high temperatures.

The yield strength of the polymer (F) is a measure of the maximum stress to be applied at which the polymer (F) begins to deform plastically. The stress at which yield occurs is dependent on both the rate of deformation (strain rate) and, more significantly, on the temperature at which the deformation occurs.

The creep strain of the polymer (F) is a measure of its tendency to deform plastically under the influence of an applied stress. It occurs as a result of long term exposure to high levels of stress which are below the yield strength of the material. The rate of this deformation is a function of the material properties, exposure time, exposure temperature and the applied structural load.

For the purpose of the present invention, by the term "plastic deformation" it is hereby intended to denote permanent and non-reversible deformation of the polymer (F).

The yield strength and the creep strain of the polymer (F) are thus a measure of its tendency to deform plastically under the influence of pressure impacts, in particular at high operating temperatures.

By the term "pipe", it is hereby intended to denote a continuous tubular pipe made of, or at least comprising, the polymer (F) as defined above or a continuous tubular pipe whose inner surface is coated with a tubular layer made

of, or at least comprising, the polymer (F) as defined above.

Said at least one layer of the pipe of the invention at least comprises, but preferably consists of polymer (F). This means that embodiments wherein said layer comprises polymer (F) in combination with other layer components are encompassed in the scope of the present invention. It is nevertheless understood that embodiments wherein polymer (F) is the sole polymer component are preferred. More particularly, embodiments wherein the layer is made from polymer (F) possibly in admixture with minor amounts of additional ingredients like pigment, additives, lubricants, and the like which do not substantially modify the properties of polymer (F) are preferred.

The polymer (F) of the pipe of the invention is typically manufactured by aqueous emulsion polymerisation or aqueous suspension polymerisation processes.

The polymer (F) of the pipe of the invention is preferably manufactured by aqueous emulsion polymerisation.

The aqueous emulsion polymerisation is typically carried out in an aqueous medium in the presence of an inorganic water-soluble radical initiator, such as peroxide, percarbonate, persulphate or azo compounds. A reducing agent can be added so as to make easier the initiator decomposition. Non-limitative examples of suitable reducing agents include iron salts. The initiator amount used depends on the reaction temperature and on the reaction conditions. The polymerisation process is carried out at temperatures typically comprised between 50°C and 90°C, preferably between 70°C and 80°C. A chain transfer agent may also be introduced during the polymerisation reaction. Non-limitative examples of suitable chain transfer agents include ethane, methane, propane, chloroform and the like. The polymerisation may be carried out in the presence of fluorinated surfactants such as for example perfluoroalkylcarboxylic acid salts (for example ammonium perfluorocaprylate, ammonium perfluorooctanoate) or other compounds such as for example perfluoroalkoxybenzensulphonic acid salts, as described for example in EP 184459 A (E.I. DU PONT DE NEMOURS AND COMPANY) 11/06/1986 . Some other fluorinated surfactants that can be used in the polymerization process are described in US 3271341 (E. I. DU PONT DE NEMOURS AND COMPANY) 06/09/1966 , WO 2007/011631 (3M INNOVATIVE PROPERTIES COMPANY) 25/01/2007 and WO 2010/003929 (SOLVAY SOLEXIS S.P.A.) 14/01/2010 . It is particularly advantageous to carry out the polymerization in aqueous phase in the presence of perfluoropolyethers, which can be added in the reaction medium under the form of aqueous emulsion in the presence of a suitable dispersing agent, as described in EP 247379 A (AUSIMONT S.P.A.) 02/12/1987 or, preferably, in the form of aqueous microemulsion as described in US 4864006 (AUSIMONT S.P.A.) 05/09/1989 .

The latex so obtained is then coagulated and the solid recovered is dried and granulated. The granules are extruded by conventional melt-processing techniques.

The polymer (F) of the pipe of the invention is advantageously melt-processable.

By the term "melt-processable", it is hereby intended to denote a polymer (F) which can be processed by conventional melt-processing techniques.

The melt flow index measures the amount of polymer which can be pushed through a die, according to ASTM D1238 standard test method, at a specified temperature using a specified load weight. Thus, the melt flow index is a measure for the suitability for melt-processing the polymer (F). This typically requires that the melt flow index be more than 0.1 g/10 min, as measured according to ASTM D1238 at 372°C under a load of 5 Kg.

It is essential that the polymer (F) of the pipe of the invention has a melt flow index comprised between 0.5 and 6.0 g/10 min, as measured according to ASTM D1238 at 372°C under a load of 5 Kg.

It has been found that, when the melt flow index of the polymer (F) is lower than 0.5 g/10 min, as measured according to ASTM D1238 at 372°C under a load of 5 Kg, the pipe cannot be easily manufactured by melt-processing the polymer (F) using well known melt-processing techniques.

On the other hand, it has been found that, when the melt flow index of the polymer (F) is higher than 6.0 g/10 min, as measured according to ASTM D1238 at 372°C under a load of 5 Kg, the pipe obtained therefrom does not comply with the required performances under high temperature and high temperature conditions.

The polymer (F) of the pipe of the invention preferably has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

The perfluorinated alkyl vinyl ether of formula (I) of the polymer (F) of the pipe of the invention preferably complies with formula (II) here below:

$$CF_2=CF\text{-}O\text{-}R'_f \qquad \text{(II)}$$

wherein $R'_f$ is a linear or branched $C_3$-$C_5$ perfluorinated alkyl group.

Non-limitative examples of suitable perfluorinated alkyl vinyl ethers of formula (II) include, notably, those wherein $R'_f$ is a $-C_3F_5$, $-C_4F_7$ or $-C_5F_9$ group.

The perfluorinated alkyl vinyl ether of formula (I) of the polymer (F) of the pipe of the invention more preferably is perfluoropropyl vinyl ether (PPVE).

It is essential that the polymer (F) of the pipe of the invention comprises from 0.8% to 2.5% by weight of recurring

units derived from at least one perfluorinated alkyl vinyl ether having formula (I) as defined above.

It has been found that, when the amount of recurring units derived from at least one perfluorinated alkyl vinyl ether having formula (I) is lower than 0.8% by weight, the pipes obtained therefrom do not comply with the required performances under high temperature and high pressure conditions.

On the other hand, it has been found that, when the amount of recurring units derived from at least one perfluorinated alkyl vinyl ether having formula (I) is higher than 2.5% by weight, the pipes obtained therefrom suffer from plastic deformation under the influence of internal pressure impacts, in particular at high operating temperatures.

The polymer (F) of the pipe of the invention comprises from 1.2% to 2.5% by weight, more preferably from 1.4% to 2.2% by weight of recurring units derived from at least one perfluorinated alkyl vinyl ether having formula (I) as defined above.

The polymer (F) of the pipe of the invention comprises from 1.2% to 2.5% by weight, more preferably from 1.4% to 2.2% by weight of recurring units derived from at least one perfluorinated alkyl vinyl ether having formula (I) as defined above, and preferably has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

The polymer (F) of the pipe of the invention comprises from 1.2% to 2.5% by weight, more preferably from 1.4% to 2.2% by weight of recurring units derived from at least one perfluorinated alkyl vinyl ether having formula (II) as defined above, and preferably has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

Good results have been obtained using a polymer (F) comprising from 1.2% to 2.5% by weight, preferably from 1.4% to 2.2% by weight of recurring units derived from perfluoropropylvinylether (PPVE), and having a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

The polymer (F) of the pipe of the invention may further comprise recurring units derived from one or more fluorinated comonomers (F) different from the perfluorinated alkyl vinyl ether having formula (I) as defined above.

By the term "fluorinated comonomer (F)", it is hereby intended to denote an ethylenically unsaturated comonomer comprising at least one fluorine atoms.

Non-limitative examples of suitable fluorinated comonomers (F) include, notably, the followings:

(a) $C_2$-$C_8$ fluoro- and/or perfluoroolefins such as tetrafluoroethylene (TFE), hexafluoropropylene (HFP), pentafluoropropylene and hexafluoroisobutylene;

(b) $C_2$-$C_8$ hydrogenated monofluoroolefins, such as vinylidene fluoride (VDF), vinyl fluoride; 1,2-difluoroethylene and trifluoroethylene;

(c) perfluoroalkylethylenes of formula $CH_2$=CH-$R_{f0}$, wherein $R_{f0}$ is a $C_1$-$C_6$ perfluoroalkyl group;

(d) chloro- and/or bromo- and/or iodo-$C_2$-$C_6$ fluoroolefins such as chlorotrifluoroethylene (CTFE);

(e) (per)fluoroalkylvinylethers of formula $CF_2$=CFO$R_{f1}$, wherein $R_{f1}$ is a $C_1$-$C_2$ fluoro- or perfluoroalkyl group, e.g. -$CF_3$, -$C_2F_5$;

(f) (per)fluoro-oxyalkylvinylethers of formula $CF_2$=CFO$X_0$, wherein $X_0$ is a $C_1$-$C_{12}$ oxyalkyl group or a $C_1$-$C_{12}$ (per)fluorooxyalkyl group having one or more ether groups, e.g. perfluoro-2-propoxy-propyl group;

(g) fluoroalkyl-methoxy-vinylethers of formula $CF_2$=CFOC$F_2$O$R_{f2}$, wherein $R_{f2}$ is a $C_1$-$C_6$ fluoro- or perfluoroalkyl group, e.g. -$CF_3$, -$C_2F_5$, -$C_3F_7$ or a $C_1$-$C_6$ (per)fluorooxyalkyl group having one or more ether groups, e.g.-$C_2F_5$-O-$CF_3$;

(h) fluorodioxoles of formula :

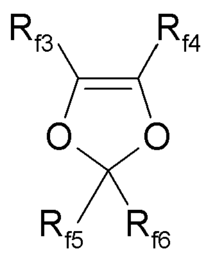

wherein each of $R_{f3}$, $R_{f4}$, $R_{f5}$ and $R_{f6}$, equal to or different from each other, is independently a fluorine atom, a $C_1$-$C_6$ fluoro- or per(halo)fluoroalkyl group, optionally comprising one or more oxygen atoms, e.g. -$CF_3$, -$C_2F_5$,-$C_3F_7$, -$OCF_3$, -$OCF_2CF_2OCF_3$.

Should one or more fluorinated comonomers (F) be present, the polymer (F) of the pipe of the invention

comprises typically from 0.8% to 2.5% by weight of recurring units derived from said fluorinated comonomer (F).

Nevertheless, embodiments wherein the polymer (F) is free from said additional comonomers (F) are preferred.

The polymer (F) of the pipe consists of:

- from 1.2% to 2.5% by weight, more preferably from 1.4% to 2.2% by weight of recurring units derived from at least one perfluorinated alkyl vinyl ether having formula (I) as defined above, and
- from 97.5% to 98.8% by weight, more preferably from 97.8% to 98.6% by weight of recurring units derived from TFE,

said TFE copolymer having a melt flow index comprised between 0.5 and 6.0 g/10 min, as measured according to ASTM D1238 at 372°C under a load of 5 Kg.

It is understood that chain ends, defects or other impurity-type moieties might be comprised in the polymer (F) without these impairing its properties.

The polymer (F) of the pipe consists of:

- from 1.2% to 2.5% by weight, more preferably from 1.4% to 2.2% by weight of recurring units derived from at least one perfluorinated alkyl vinyl ether having formula (I) as defined above, and
- from 97.5% to 98.8% by weight, more preferably from 97.8% to 98.6% by weight of recurring units derived from TFE;

and preferably has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

The polymer (F) of the pipe consists of:

- from 1.2% to 2.5% by weight, more preferably from 1.4% to 2.2% by weight of recurring units derived from at least one perfluorinated alkyl vinyl ether having formula (II) as defined above, and
- from 97.5% to 98.8% by weight, more preferably from 97.8% to 98.6% by weight of recurring units derived from TFE;

and preferably has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

Excellent results have been obtained using a polymer (F) consisting of:

- from 1.2% to 2.5% by weight, preferably from 1.4% to 2.2% by weight of recurring units derived from perfluoropropylvinylether (PPVE), and
- from 97.5% to 98.8% by weight, preferably from 97.8% to 98.6% by weight of recurring units derived from TFE;

and having a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

The polymer (F) of the pipe of the invention is advantageously thermoplastic.

By the term "thermoplastic", it is hereby intended to denote a polymer (F) existing, at room temperature (25°C), below its melting point if it is semi-crystalline or below its $T_g$ if it is amorphous. These polymers have the property of becoming soft when they are heated and of becoming rigid again when hey are cooled, without there being an appreciable chemical change. Such a definition may be found, for example, in the encyclopedia called "Polymer Science Dictionary", Mark S.M. Alger, London School of Polymer Technology, Polytechnic of North London, UK, published by Elsevier Applied Science, 1989.

The polymer (F) of the pipe of the invention is preferably semi-crystalline.

By the term "semi-crystalline", it is hereby intended to denote a polymer having a heat of fusion of more than 1 J/g when measured by Differential Scanning Calorimetry (DSC) at a heating rate of 10°C/min, according to ASTM D 3418.

The polymer (F) of the pipe of the invention has a melting point comprised between 311°C and 321°C, preferably between 311°C and 318°C.

Very good results have been obtained using a polymer (F) having a melting point comprised between 312°C and 317°C.

Most preferred polymers (F) of the pipe of the invention comprises from 1.2% to 2.5% by weight of recurring units derived from at least one perfluorinated alkyl vinyl ether having formula (II) and have:

- a melt flow index comprised between 0.6 and 5.5 g/10 min, as measured according to ASTM D1238 at 372°C under a load of 5 Kg, and

- a melting point comprised between 311°C and 318°C.

Even more preferred polymers (F) of the pipe of the invention are those consisting of:

- from 1.2% to 2.5% by weight of recurring units derived from at least one perfluorinated alkyl vinyl ether having formula (II) as defined above, and
- from 97.5% to 98.8% by weight of recurring units derived from TFE;
  and having:
- a melt flow index comprised between 0.6 and 5.5 g/10 min, as measured according to ASTM D1238 at 372°C under a load of 5 Kg, and
- a melting point comprised between 311°C and 318°C.

The pipe of the present invention is typically manufactured by well known melt-processing techniques such as melt extrusion.
The Applicant has surprisingly found that, due to the advantageous inherent mechanical properties of the polymer (F), the pipe of the present invention successfully withstands temperatures up to 280°C, preferably up to 300°C.
The Application has also found that the pipe of the invention has advantageously a smooth inner surface.
By the term "flexible riser", it is hereby intended to denote a flexible tubular pipe wherein the constituent layers comprise polymeric sheaths for providing a sealing function and reinforcing layers intended to take up the mechanical forces and which are formed by windings of metal wires or strips or various tapes or sections made of composites.
By the term "unbonded flexible riser", it is hereby intended to denote a flexible riser comprising two or more superposed concentric layers, wherein these layers have a certain freedom to move relative to one another.
According to a first variant of the invention, the unbonded flexible riser is a rough-bore flexible riser.
By the term "rough-bore flexible riser", it is intended to denote a flexible riser wherein the innermost element is an internal carcass which forms a rough bore owing to gaps between the turns of the carcass that allow it to flex.
The rough-bore flexible riser of this first variant of this embodiment of the invention typically comprises, from the interior towards the exterior:

- an internal flexible metal tube, called the internal carcass, formed by a helically wound profiled member with the turns clipped together,
- an internal polymeric sheath at least comprising, preferably consisting of (or being made of), a polymer (F) as defined above,
- one or more armor plies wound around the internal polymeric sheath, and
- an external polymeric sheath.

The internal polymeric sheath is typically coated over the internal carcass of the rough-bore flexible riser so that a continuous tubular layer at least comprising, preferably consisting of (or being made of), a polymer (F) as defined above is obtained.
The internal polymeric sheath is preferably extruded over the internal carcass of the rough-bore flexible riser by conventional melt-processing techniques.
According to a second variant of the invention, the unbonded flexible riser is a smooth-bore flexible riser.
By the term "smooth-bore flexible riser", it is hereby intended to denote a flexible riser which is free from an internal carcass, wherein the innermost element is a smooth-walled impermeable polymeric tube.
Another object of the present invention is use of the pipe of the invention in downhole operations.
Further, another object of the present invention is use of the pipe of the invention in drilling operations.
The rough-bore flexible riser of the present invention is particularly suitable for use in downhole operations such as drilling operations where the internal carcass prevents the pipe from failing under the effect of pressure impacts.
The Applicant has surprisingly found that the pipe of the present invention is successfully endowed with higher yield stress values and lower creep strain values so that it can be advantageously used in a wide variety of applications where the pipe has to withstand high pressure and high temperature conditions, while being chemical resistant in harsh environments.
Should the disclosure of any patents, patent applications, and publications which are incorporated herein by reference conflict with the description of the present application to the extent that it may render a term unclear, the present description shall take precedence.
The invention will be now described with reference to the following examples whose purpose is merely illustrative and not limitative of the present invention.

**Measurement of the melt flow index (MFI)**

The determination of the MFI was carried out according to the ASTM D1238 standard test method at 372°C under a load of 5 Kg.

**Measurement of the second melting temperature (T(II) melting point)**

The second melting temperature was determined according to the ASTM D4591 standard test method. The melting point observed at the second heating period was recorded and is hereby referred to as the melting point of the polymer.

**Measurement of the percentage by weight of the perfluorinated alkyl vinyl ether (I) in the polymer**

The determination of the perfluorinated alkyl vinyl ether monomer (I) was carried out by FT-IR analysis and expressed as per cent by weight. The perfluorinated alkyl vinyl ether monomer (I) content was determined under the following conditions: the band optical density (OD) at 994 $cm^{-1}$ was normalized with the band optical density (OD) at 2365 $cm^{-1}$ by means of the following formula:

$$\text{Monomer (I) [\% by weight]} = (\text{OD at } 994\ cm^{-1})/(\text{OD at } 2365\ cm^{-1}) \times 0.99$$

**Measurement of the tensile properties**

Tensile tests on polymers (F) according to Examples 1 to 3 of the invention and comparative Examples 1 and 2 were performed by an Instron 4203 machine using microtensile specimens as reported in ASTM D3307 standard test method; specimens were cut by hollow punch from compression molded sheets having a thickness of 1.5 mm and were stretched at a speed equal to 50 mm/min after 15 minutes of conditioning time at the required temperature.
Yield stress was evaluated as nominal stress at first zero slope point on the stress-strain curve.

Tensile tests on pipes made of polymers (F) according to Example 4 or 5 of the invention were performed according to ASTM D638 standard procedure using specimens of type IV having a thickness of 7 mm at a grip distance of 65 mm and a gauge length of 12.5 mm. Modulus values have been measured at a cross-head speed of 1 mm/min, whereas strain at break and stress at yield values have been measured at a cross-head speed of 50 mm/min.
Yield stress was evaluated as nominal stress at first zero slope point on the stress-strain curve. Rupture is the point where a sharp load drop occurs and specimens break.

The higher is the yield stress value, the higher is the resistance to plastic deformation of the polymer.

Tensile creep tests on polymers (F) according to Examples 1 to 3 of the invention and comparative Examples 1 and 2 were performed according to ASTM D2990 standard test method but using specimen dimensions described in ISO 527-1A; no extensometers were used, but specimen shape correction was employed in order to get good strain evaluation. Specimens were cut by hollow punch from compression molded sheets having a thickness of 1.5 mm.

Tensile creep tests on polymers (F) according to Example 4 or 5 were performed according to ASTM D2990 standard test method but using specimen dimensions described in ISO 527-1A; no extensometers were used, but specimen shape correction was employed in order to get good strain evaluation. Specimens were cut by hollow punch from pipes having a thickness of 7 mm.

The lower is the creep strain value, the higher is the resistance to plastic deformation of the polymer.

**Processing of pipes**

The polymer was extruded in a 45 mm extruder equipped with a head to produce pipes having an external diameter of 12 mm and an internal diameter of 10 mm. The temperature profile on the machine was set between 280°C and 380°C. The cone at the exit of the head appeared transparent and the surface of the pipe so obtained was smooth without any defect.

**Measurement of the shrinkage**

The pipes were cut in a longitudinal direction to a length of 400 mm. After thermal treatment at 300°C for one hour, their length was re-measured at 23°C thus obtaining the percent variation.

**Measurement of rapid gas decompression**

Rapid gas decompression (RGD) tests on specimens cut from pipes made of polymers (F) according to Example 5 of the invention were performed according to ISO 13628-2 standard procedure (API 17J).

The samples were preconditioned for 30 days in NORSOK® M710 oil at 185°C under vapour pressure and this was followed by 20 rapid gas decompression cycles at 185°C and 1000 bar using a mixture of 15% by moles of carbon dioxide in methane. The decompression rate was 70 bar per minute.

**Example 1: TFE/PPVE 98.2/1.8 (weight ratio)**

In an AISI 316 steel vertical 22 litres autoclave, equipped with a stirrer working at 400 rpm, after the vacuum was made, were introduced in sequence:

- 13.9 litres of demineralised water;
- 32.0 g of perfluoropropylvinylether (PPVE);
- 138.0 g of a microemulsion prepared according to Example 1 of US 4864006 (AUSIMONT S.P.A.) 05/09/1989 having a pH of about 7.5. The autoclave was then heated up to reaction temperature of 60°C and,

when this temperature was reached, 0.60 bar of ethane were introduced. By a compressor a gaseous mixture of TFE/PPVE in nominal molar ratio of 99.2/0.8 was added until reaching a pressure of 21 bar.

The composition of the gaseous mixture present at the autoclave head (as determined by GC analysis) was formed of the following compounds in the indicated molar percentages: 95.9% TFE, 2.0% PPVE, 2.1% ethane. Then, by a metering pump, 100 ml of a 0.035 M ammonium persulphate solution were fed.

The polymerization pressure was maintained constant by feeding the above mentioned monomeric mixture; when 8.8 g of the mixture were fed, the monomer feeding was interrupted. The reactor was cooled to room temperature, the latex was discharged and coagulated with $HNO_3$ (65% by weight) and the polymer was washed with $H_2O$ and dried at about 220°C. Determination of the obtained polymer:

Composition (IR analysis): PPVE: 1.8% by weight
MFI: 5.0 g/10 min
Second melting temperature (T(II) melting point): 314°C

**Example 2: TFE/PPVE 98.6/1.4 (weight ratio)**

The same procedure as detailed under Example 1 was followed but:

- 25.0 g of PPVE were fed;
- 0.50 bar of ethane were fed;
- a gaseous mixture of TFE/PPVE in nominal molar ratio of 99.4/0.6 was added.

The composition of the gaseous mixture present at the autoclave head (as determined by GC analysis) was formed of the following compounds in the indicated molar percentages: 96.90% TFE, 1.55% PPVE, 1.55% ethane. Determinations on the obtained polymer:

Composition (IR analysis): PPVE: 1.4% by weight
MFI: 3.0 g/10 min
Second melting temperature (T(II) melting point): 317°C

**Example 3: TFE/PPVE 98.6/1.4 (weight ratio)**

The same procedure as detained under Example 1 was followed but:

- 25.0 g of PPVE were fed;
- 0.40 bar of ethane were fed;
- a gaseous mixture of TFE/PPVE in nominal molar ratio of 99.4/0.6 was added;
- 150 ml of a 0.035 M ammonium persulphate solution were fed.

The composition of the gaseous mixture present at the autoclave head (as determined by GC analysis) was

formed of the following compounds in the indicated molar percentages: 96.2% TFE, 1.7% PPVE, 2.1% ethane. Determinations on the obtained polymer:

Composition (IR analysis): PPVE: 1.5% by weight
MFI: 2.0 g/10 min
Second melting temperature (T(II) melting point): 316°C

As shown in Table 1 here below, reporting the results of yield strength tests at 280°C, the polymers (F) according to the invention advantageously exhibited improved yield stress values at temperatures up to 280°C as compared with commercially available products of comparative Examples 1 and 2.

**Table 1**

| Run | PPVE [% wt.] | MFI [g/10 min] | Tm [°C] | Yield stress [MPa] |
|---|---|---|---|---|
| **Example 1** | 1.8 | 5.0 | 314 | 3.6 |
| **Example 2** | 1.4 | 3.0 | 317 | 3.5 |
| **Example 3** | 1.5 | 2.0 | 316 | 3.5 |
| **C. Example 1** | 3.8 | 2.5 | 307 | 2.8 |
| **C. Example 2** | 3.3 | 2.5 | 310 | 3.2 |

As shown in Table 2 here below, reporting the results of the creep strain tests, the polymers (F) according to the invention advantageously exhibited lower creep strain values as compared with commercially available product of comparative Example 2.

**Table 2**

| Run | PPVE [% wt.] | MFI [g/10 min] | Tm [°C] | Creep strain 280°C 1.0 MPa (1000 hours) | Creep strain 300°C 1.0 MPa (1000 hours) |
|---|---|---|---|---|---|
| **Example 2** | 1.4 | 3.0 | 317 | 12.0% | - |
| **Example 3** | 1.5 | 2.0 | 317 | 9.3% | 20.0% |
| **C. Example 2** | 3.3 | 2.5 | 310 | 17.8% | > 40% |

As shown in Table 3 here below, pipes were obtained using the polymer (F) according to the present invention which advantageously were endowed with shrinkage values at 300°C comparable to those of commercially available product of comparative Example 1.

**Table 3**

| Run | PPVE [% wt.] | MFI [g/10 min] | Tm [°C] | Shrinkage 300°C |
|---|---|---|---|---|
| **Example 3** | 1.5 | 5.0 | 317 | 2.3% |
| **C. Example 1** | 3.8 | 2.5 | 307 | 3.0% |

It has been thus found that the pipe of the present invention comprising at least one layer at least comprising, preferably consisting of (or being made of), the polymer (F) advantageously exhibits enhanced yield strength values, both in short-term and long-term trials, in particular at high operating temperatures, so that it can successfully withstand high internal pressure levels because of its improved mechanical properties.

**Example 4: TFE/PPVE 97.8/2.2 (weight ratio)**

The same procedure as detained under Example 1 was followed but:

- 38 g of PPVE were fed;
- 0.51 bar of ethane were fed; and
- a gaseous mixture of TFE/PPVE in nominal molar ratio of 98.8/1.2 was added.

The composition of the gaseous mixture present at the autoclave head (as determined by GC analysis) was formed of the following compounds in the indicated molar percentages: 93.0% TFE, 6.2% PPVE, 0.7% ethane. Determinations on the obtained polymer:

Composition (IR analysis): PPVE: 2.2% by weight
MFI: 3.3 g/10 min
Second melting temperature (T(II) melting point): 311.4°C

**Example 5: TFE/PPVE 97.8/2.2 (weight ratio)**

The same procedure as detained under Example 1 was followed but:

- 38 g of PPVE were fed;
- 0.35 bar of ethane were fed; and
- a gaseous mixture of TFE/PPVE in nominal molar ratio of 98.8/1.2 was added.

The composition of the gaseous mixture present at the autoclave head (as determined by GC analysis) was formed of the following compounds in the indicated molar percentages: 93.5% TFE, 6.0% PPVE, 0.5% ethane. Determinations on the obtained polymer:

Composition (IR analysis): PPVE: 2.2% by weight
MFI: 1.7 g/10 min
Second melting temperature (T(II) melting point): 311.6°C

As shown in Table 4 here below, reporting the results of tensile tests at 23 °C, pipes made of the polymers (F) according to the invention as notably represented by Example 4 or 5 of the invention advantageously exhibited good mechanical properties.

**Table 4**

| Run | Modulus [MPa] | Yield Stress [MPa] | Stress at Break [MPa] | Strain at Break [MPa] |
|---|---|---|---|---|
| **Example 4** | 424 | 13.3 | 29.6 | 311 |
| **Example 5** | 443 | 13.4 | 30.2 | 320 |

As shown in Table 5 here below, reporting the results of the creep strain tests, pipes made of the polymer (F) according to the invention as notably represented by Example 4 of the invention advantageously exhibited relatively low creep strain values without undergoing yielding failure under relatively high stress of 3.0 MPa and 4.0 MPa.

**Table 5**

| Run | PPVE [% wt.] | MFI [g/10 min] | Tm [°C] | Creep strain 200°C 3.0 MPa (1000 hours) | Creep strain 200°C 4.0 MPa (1000 hours) |
|---|---|---|---|---|---|
| **Example 4** | 2.2 | 3.3 | 311 | 14.4% | 33.8% |

As shown in Table 6 here below, reporting the results of the rapid gas decompression (RGD) tests, pipes made of the polymer (F) according to the invention as notably represented by Example 5 advantageously exhibited no visible cracks to be suitably used in downhole applications without undergoing decompression under the effect of pressure

impacts.

**Table 6**

| Run | Visible RGD damages |
|---|---|
| **Example 5** | After 20 RGD cycles: no visible cracks |

The pipe of the present invention is thus particularly suitable for use in operations where high thermal resistance at high operating temperatures is required.

## Claims

1. A pipe being an unbonded flexible riser and comprising at least one layer made of a tetrafluoroethylene (TFE) copolymer consisting of:

   - from 1.2% to 2.5% by weight, preferably from 1.4% to 2.2% by weight of recurring units derived from at least one perfluorinated alkyl vinyl ether having formula (I) here below:

   $$CF_2=CF\text{-}O\text{-}R_f \qquad (I)$$

   wherein $R_f$ is a linear or branched $C_3$-$C_5$ perfluorinated alkyl group or a linear or branched $C_3$-$C_{12}$ perfluorinated oxyalkyl group comprising one or more ether oxygen atoms, and
   - from 97.5% to 98.8% by weight, more preferably 97.8% to 98.6% by weight of recurring units derived from TFE,

   said TFE copolymer having a melt flow index comprised between 0.5 and 6.0 g/10 min, as measured according to ASTM D1238 at 372°C under a load of 5 Kg, and a melting point comprised between 311°C and 321°C, preferably between 311°C and 318°C [polymer (F)].

2. The pipe according to claim 1, wherein the polymer (F) has a melt flow index comprised between 0.6 and 5.5 g/10 min, more preferably between 0.7 and 4.5 g/10 min, even more preferably between 1.2 and 3.5 g/10 min, as measured according to ASTM D1238 at 372°C under a load of 5 Kg.

3. The pipe according to claim 1 or 2, wherein the perfluorinated alkyl vinyl ether complies with formula (II) here below:

   $$CF_2=CF\text{-}O\text{-}R'_f \qquad (II)$$

   wherein $R'_f$ is a linear or branched $C_3$-$C_5$ perfluorinated alkyl group.

4. The pipe according to any one of claims 1 to 3, wherein the perfluorinated alkyl vinyl ether is perfluoropropyl vinyl ether (PPVE).

5. The pipe according to any one of claims 1 to 4, the pipe being a rough-bore flexible riser.

6. The pipe according to claim 5, the pipe comprising, from the interior towards the exterior:

   - an internal flexible metal tube, called the internal carcass, formed by a helically wound profiled member with the turns clipped together,
   - an internal polymeric sheath at least comprising, preferably consisting of the polymer (F),
   - one or more armor plies wound around the internal polymeric sheath, and
   - an external polymeric sheath.

7. The pipe according to claim 6, wherein the internal polymeric sheath is extruded over the internal carcass of the rough-bore flexible riser by conventional melt-processing techniques.

8. The pipe according to any one of claims 1 to 4, the pipe being a smooth-bore flexible riser.

**9.** Use of the pipe according to any one of claims 1 to 8 in downhole operations.

**10.** Use of the pipe according to any one of claims 1 to 8 in drilling operations.

**Patentansprüche**

**1.** Ein Rohr, das ein ungebundenes, flexibles Steigrohr ist und mindestens eine Schicht aus einem Tetrafluorethylen-(TFE)-Copolymer umfasst, bestehend aus:

- 1,2 Gew.-% bis 2,5 Gew.-%, bevorzugt 1,4 Gew.-% bis 2,2 Gew.-%, wiederkehrender Einheiten, die von mindestens einem perfluorierten Alkylvinylether, der die nachstehende Formel (I) aufweist, abgeleitet sind:

$$CF_2=CF\text{-}O\text{-}R_f \qquad (I)$$

wobei $R_f$ eine lineare oder verzweigte $C_3$-$C_5$ perfluorierte Alkylgruppe oder eine lineare oder verzweigte $C_3$-$C_{12}$ perfluorierte Oxyalkylgruppe ist, umfassend ein oder mehrere Ethersauerstoffatome, und
- 97,5 Gew.-% bis 98,8 Gew.-%, stärker bevorzugt 97,8 Gew.-% bis 98,6 Gew.-%, wiederkehrender Einheiten, die von TFE abgeleitet sind,

wobei das TFE-Copolymer einen Schmelzflussindex, enthalten zwischen 0,5 und 6,0 g/10 min, wie gemäß ASTM D1238 bei 372°C unter einer Last von 5 kg gemessen wurde, und einen Schmelzpunkt, enthalten zwischen 311°C und 321°C, bevorzugt zwischen 311°C und 318°C [Polymer (F)], aufweist.

**2.** Das Rohr gemäß Anspruch 1, wobei das Polymer (F) einen Schmelzflussindex, enthalten zwischen 0,6 und 5,5 g/10 min, stärker bevorzugt zwischen 0,7 und 4,5 g/10 min, noch stärker bevorzugt zwischen 1,2 und 3,5 g/10 min, wie gemäß ASTM D1238 bei 372°C unter einer Last von 5 kg gemessen wurde, aufweist.

**3.** Das Rohr gemäß Anspruch 1 oder 2, wobei der perfluorierte Alkylvinylether der nachstehenden Formel (II) entspricht:

$$CF_2=CF\text{-}O\text{-}R'_f \qquad (II)$$

wherein $R'_f$ eine lineare oder verzweigte $C_3$-$C_5$ perfluorierte Alkylgruppe ist.

**4.** Das Rohr gemäß einem der Ansprüche 1 bis 3, wobei der perfluorierte Alkylvinylether Perfluorpropylvinylether (PPVE) ist.

**5.** Das Rohr gemäß einem der Ansprüche 1 bis 4, wobei das Rohr ein vorgebohrtes, flexibles Steigrohr ist.

**6.** Das Rohr gemäß Anspruch 5, wobei das Rohr von innen nach außen umfasst:

- ein inneres flexibles Metallrohr, das als innere Karkasse bezeichnet wird, gebildet durch ein schraubenförmig gewundenes, profiliertes Element mit zusammengeklippten Windungen,
- eine innere Polymerhülle, die mindestens das Polymer (F) umfasst, bevorzugt daraus besteht,
- ein oder mehrere Panzerungslagen, die um die innere Polymerhülle gewunden sind, und
- eine äußere Polymerhülle.

**7.** Das Rohr gemäß Anspruch 6, wobei die innere Polymerhülle über die innere Karkasse des vorgeborten, flexiblen Steigrohrs mittels konventioneller Schmelzverarbeitungstechniken extrudiert wird.

**8.** Das Rohr gemäß einem der Ansprüche 1 bis 4, wobei das Rohr ein flexibles Steigrohr mit glatter Bohrung ist.

**9.** Verwendung des Rohrs gemäß einem der Ansprüche 1 bis 8 bei Bohrloch-Arbeiten.

**10.** Verwendung des Rohrs gemäß einem der Ansprüche 1 bis 8 bei Bohrarbeiten.

## Revendications

1. Conduite qui est une colonne montante flexible non liée et qui comprend au moins une couche composée d'un copolymère de tétrafluoroéthylène (TFE) constituée de :

   - 1,2% à 2,5% en poids, de préférence de 1,4% à 2,2% en poids d'unités récurrentes dérivées d'au moins un éther d'alkyle et de vinyle perfluoré ayant la formule (I) ci-dessous :

   $$\mathbf{CF_2{=}CF\text{-}O\text{-}R_f} \qquad \mathbf{(I)}$$

   où $R_f$ est un groupe alkyle perfluoré $C_3$-$C_5$ linéaire ou ramifié ou un groupe alcoxyle perfluoré $C_3$-$C_{12}$ linéaire ou ramifié comprenant un ou plusieurs d'atomes d'oxygène, et
   - 97,5% à 98,8% en poids, de préférence 97,8% à 98,6% en poids d'unités récurrentes dérivées de TFE,

   ledit copolymère de TFE ayant un indice de fluidité compris entre 0,5 et 6 g/10 minutes, mesuré selon la norme ASTM D1238 à 372°C sous une charge de 5 kg, et un point de fusion compris entre 311°C et 321°C, de préférence entre 311°C et 318°C [polymère (F)].

2. Conduite selon la revendication 1, dans laquelle le polymère (F) possède un indice de fluidité compris entre 0,6 et 5,5 g/10 minutes, de préférence entre 0,7 et 4,5 g/10 minutes, et de préférence entre 1,2 et 3,5 g/10 minutes, mesuré selon la norme ASTM D1238 à 372°C sous une charge de 5 kg.

3. Conduite selon la revendication 1 ou 2, dans laquelle l'éther d'alkyle et de vinyle perfluoré est conforme à la formule (II) ci-dessous :

   $$\mathbf{CF_2{=}CF\text{-}O\text{-}R'_f} \qquad \mathbf{(II)}$$

   où $R'_f$ est un groupe alkyle perfluoré $C_3$-$C_5$ linéaire ou ramifié.

4. Conduite selon l'une quelconque des revendications 1 à 3, dans laquelle l'éther d'alkyle et de vinyle perfluoré est un éther de vinyle perfluoropropylé (PPVE).

5. Conduite selon l'une quelconque des revendications 1 à 4, la conduite étant une colonne montante flexible à hélice intérieure semi-noyée.

6. Conduite selon la revendication 5, la conduite comprenant, de l'intérieur vers l'extérieur :

   - un tube métallique flexible interne, appelé « carcasse interne », formé par un élément profilé enroulé de manière hélicoïdal avec les tours assemblés les uns avec les autres,
   - une gaine polymérique interne comprenant au moins et composée de préférence du polymère (F),
   - un ou plusieurs fils d'armure enroulés autour de la gaine polymérique interne, et
   - une gaine polymérique externe.

7. Conduite selon la revendication 6, dans laquelle la gaine polymérique interne est extrudée par-dessus la carcasse interne de la colonne montante flexible à hélice intérieure semi-noyée par des techniques de fusion classiques.

8. Conduite selon l'une quelconque des revendications 1 à 4, la conduite étant une colonne montante flexible à intérieur lisse.

9. Utilisation de la conduite selon l'une quelconque des revendications 1 à 8 pour des opérations de forage descendant.

10. Utilisation de la conduite selon l'une quelconque des revendications 1 à 8 pour des opérations de forage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6774196 B
- US 2003069343 A
- EP 184459 A
- US 3271341 A
- WO 2007011631 A
- WO 2010003929 A
- EP 247379 A
- US 4864006 A


### Non-patent literature cited in the description


- **MARK S.M. ALGER.** Polymer Science Dictionary. Elsevier Applied Science, 1989